# EUROPEAN PATENT SPECIFICATION

(11) **EP 4 336 825 B1**
(45) Date of publication and mention of the grant of the patent: **16.07.2025**
(21) Application number: 23196653.2
(22) Date of filing: 11.09.2023
(51) Int. Cl.: H04N 7/18, H04N 21/218, H04N 21/2187, H04N 21/2747, H04N 21/6587, H04N 21/2343, H04N 21/431

(54) **INTEGRATED VIDEO PRODUCTION SYSTEM AND METHOD FOR VIDEO PRODUCTION**
INTEGRIERTES VIDEOPRODUKTIONSSYSTEM UND VERFAHREN ZUR VIDEOPRODUKTION
SYSTÈME DE PRODUCTION VIDÉO INTÉGRÉ ET PROCÉDÉ DE PRODUCTION VIDÉO

(30) Priority: 09.09.2022 EP 22194739
(43) Date of publication of application: 13.03.2024
(73) Proprietor: EVS Broadcast Equipment SA, 4102 Seraing (BE)
(72) Inventor: Barnich, Olivier, 4000 Liège (BE); Delvaux, Mathieu, 4520 Wanze (BE); Degbomont, Jean-François, 4970 Stavelot (BE)
(74) Representative: Rossmanith, Manfred

(56) References cited:
- CN-A- 113 411 647
- US-A1- 2002 049 979
- US-A1- 2012 113 264
- US-A1- 2015 215 586
- US-A1- 2017 142 172
- US-A1- 2022 231 773

## Description

### Field

The present disclosure relates to an integrated video production system and a method for video production.

### Background

In broadcast productions covering an event, e.g. a sports event, multiple cameras capture the event from different perspectives. To this end, there are cameras which are installed at positions where most of the action in the event is expected. Consequently, the camera streams provided by these cameras are frequently used in the program output stream of the video production. Therefore, these cameras are labeled "high usage cameras" in the present application. In addition to the high usage cameras, there are other cameras capturing images from a specific perspective that may be interesting or not depending on how the event evolves. An example of such other cameras is a camera mounted in the cockpit of a racing car capturing the perspective of the racing car driver. It may therefore happen that the camera stream from such camera is not used at all in the production. However, if for instance an accident happens just in front of the racing car capturing the scene, the camera stream from such camera is very interesting and will be used in the production. Consequently, these cameras are labeled "low usage cameras" in the present application to distinguish them from the high usage cameras. Since it is unpredictable whether the camera stream of a low usage camera will be important for the production or not it is necessary to record all camera streams of the low usage cameras to enable a replay of the scene which is a valuable contribution to the video production.

The camera streams of the high usage cameras are typically recorded on a video production server providing integrated video recording capabilities. However, the video production server is a very expensive device and has a limited video recording capacity which in most cases does not allow for recording all camera streams from low usage cameras. Rather, the recording capacity is limited to recording the camera streams from the high usage cameras.

Taking this as a starting point there is a need for a video production system and a method enabling cost-efficient recording of camera streams from a plurality of high usage and low usage cameras.

US2012/113264A1 relates to a computer-implemented method for presenting, selecting and viewing multi-feed content.

### Summary

According to a first aspect the present disclosure suggests a video production system comprising a plurality of low usage cameras, a plurality of high usage cameras, and a video production server, which ingests and stores camera streams provided by the plurality of high usage cameras. The system further comprises a cloud recorder. The cloud recorder ingests and stores camera streams provided by the plurality of low usage camera. The cloud recorder is communicatively connected via a first data connection with a replay device enabling an operator to browse through all the recorded camera streams from the plurality of low usage cameras and to select one of the recorded camera streams for replay by sending a corresponding command to the cloud recorder. Furthermore, the cloud recorder is communicatively connected via a second data connection for providing the recorded camera stream that has been selected to the video production server.

The cloud recorder can be rented on an as needed basis in terms of duration and capacity depending on the covered event. This approach is more cost efficient than providing additional video production servers for storing the camera streams of the low usage cameras on site or in a studio because video production servers are expensive devices.

The terms "cloud" and "cloud recorder" are to be understood in a broad sense. The term "cloud" may refer to a public cloud service and/or to infrastructure located in a remote data center that is, for example, reserved for the broadcaster and not accessible to the public.

In an advantageous embodiment the cloud recorder is adapted for transferring the recorded camera streams as low bit rate data streams via the first data connection and for transferring the selected camera stream as a high bit rate data stream via the second data connection.

The low bit rate data stream has a bit rate of 1 to 10 MB per second per camera stream while the high bit rate camera stream ranges from 50 to 800 MB per second per camera stream. However, the proposed bit rates are only an example, and the present disclosure is not limited to a specific bit rate or range of bit rates.

It has been found useful to provide for a video encoder for encoding the camera streams of the low usage cameras. An appropriately encoded camera stream can reduce the required bandwidth of data connection for transferring the camera streams.

In a further advantageous embodiment, the second data connection connects the cloud recorder with a file access and transcoder device receiving a command from the replay device identifying the selected camera stream. The file access and transcoder device downloads the selected camera stream from the cloud recorder.

In this case it has been found useful when the file access and transcoder device transcodes the downloaded camera stream and transfers it to the video production server.

Transcoding the downloaded file facilitates the integration of the selected camera stream into the video production because the camera streams from the high usage cameras may have a different format.

According to a second aspect the present disclosure suggests a method for video production. The method comprises
- storing camera streams on a cloud recorder,
- providing all recorded camera streams as low data rate streams enabling an operator to browse through all recorded camera streams
- selecting one recorded camera stream for replay; and
- providing the selected camera stream as a high data rate stream to a video production server.

According to a preferred embodiment of the method, the step of selecting a camera stream also involves defining a beginning and ending of the camera stream. Thus, only the portion of the camera stream between the defined beginning and the ending of the video clip is transferred from the cloud recorder to the video production server. This approach limits the data traffic to a necessary minimum.

### Brief description of the drawings

Exemplary embodiments of the present disclosure are illustrated in the drawings and are explained in more detail in the following description. In the figures, the same or similar elements are referenced with the same or similar reference signs. It shows:
- Fig. 1: a schematic illustration of a sports event which is covered by high usage and low usage cameras;
- Fig. 2: a schematic illustration of an architecture of an integrated video production system according to the present disclosure; and

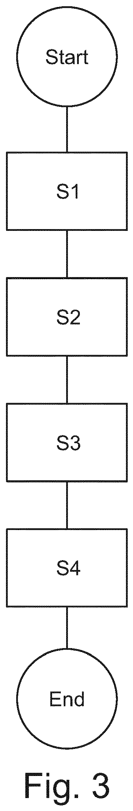

- Fig. 3: a flow diagram of a video production method according to the present disclosure.

In the figures the same or similar components are labelled with the same or similar reference signs.

### Detailed description

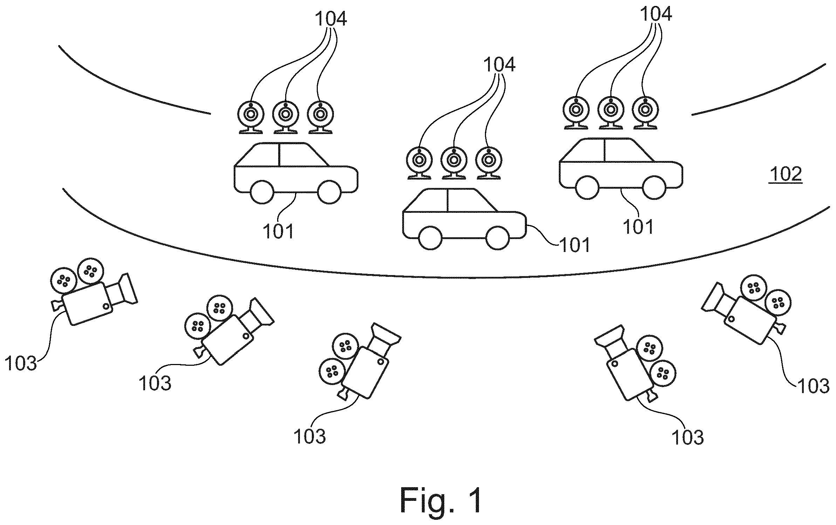

Figure 1 schematically displays a sports event and more particularly a racing event. Figure 1 displays three racing cars 101 racing on a racing track 102. Cameras 103 are installed along the racing track at the most interesting locations of the racing track 102 such as curves, chicanes or the home stretch. The camera streams of the cameras 103 are included most of the time in a program output stream of the video production. Therefore, the cameras 103 are labeled as high usage cameras. In addition to that, there are cameras 104, which are mounted in the racing cars 101 covering different perspectives from the racing car, for instance the view of the racing car driver. Typically, the camera streams of the cameras 104 mounted on board of racing cars 101 are used in the video production only if the camera 104 captures a scene which provides added value to the video production. In other words: Most of the time the camera streams of the cameras 104 are not included in a program output stream. Thus, the cameras 104 are labeled in the present application as "low usage cameras".

It is noted that the important difference between high usage cameras 103 in the low usage cameras 104 is not whether the cameras are mobile or stationary or their image resolution but rather the fact to which extent their camera streams are used in the program output stream of the video production.

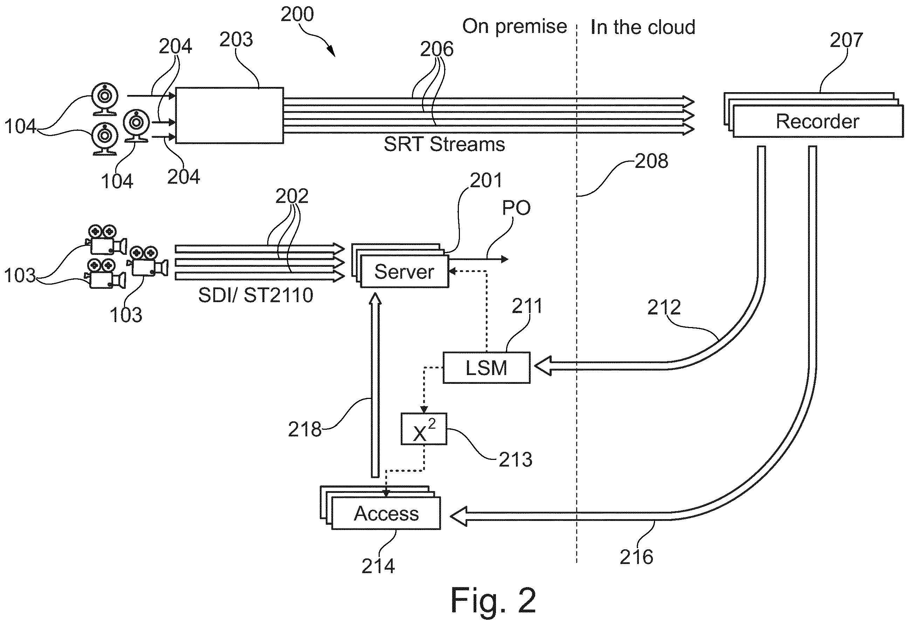

Figure 2 illustrates an embodiment of a video production system 200 according to the present disclosure. The heart of the video production system 200 is a video production server 201 which receives the camera streams of the high usage cameras 103 via wired and/or wireless data connections 202, e.g. according to the SDI or ST 2110 standard. Such video production server is commercially available for instance from EVS Broadcast Equipment ^{®}. The video production server 201 ingests and stores the camera streams from the high usage cameras 103. Furthermore, the video production server 201 provides for mixing functionalities to integrate different camera streams and/or video clips to generate a program output stream PO. For big events with many cameras 103 multiple video production servers 201 can share the tasks to make the video production. For the sake of simplicity, it is assumed in the following that there is only one video production server 201.

The low usage cameras 104 are connected with an encoder 203 via wired and/or wireless data connections 204. The encoder 203 outputs the camera streams of the low usage cameras 104 as encoded data streams. The term "encoded" is to be understood in a broad sense and encompasses e.g. compressed data streams. The camera streams are encoded for example as SRT (secure reliable transport) streams. However, any other suitable transport standard can be used as well. The encoded data streams are transferred via data connections 206 to a cloud recorder 207 that ingests and stores the encoded camera streams. In Figure 2 a vertical dashed line 208 separates devices on site of the video production and in the cloud. Devices on the left side of the dashed line 208 are on site while the cloud recorder 207 on the right hand side of the dashed line 208 is implemented in the cloud.

A replay device 211 is connected to the cloud recorder 207 by a data connection 212. In this way the replay device 211 has access to all stored camera streams from the cameras 104. The camera streams are provided as low data rate streams in the range of 1 to 10 MB per second per camera stream by the cloud recorder. In this way the replay device 211 enables an operator to browse through camera streams recorded on the cloud recorder 207. When the operator finds a recorded video clip, the operator defines an entry and exit point for the clip and sends this as a command to a media workflow management device 213 that essentially is a single entry point to orchestrate and monitor media files as they move through the live production. The media workflow management device 213 sends a command to an access and transcoder device 214 that receives the selected video clip via a data connection 216 as a high data rate data stream in the range of 50 to 800 MB per second. The access and transcoder device 214 transcodes the selected video clip to facilitate its integration into the program output stream by the video production server 201. To this end the access and transcoder device 214 is connected by a data connection 218 with the video production server 201.

In an alternative embodiment the selected camera stream is transferred entirely to the video production server 201. The editing of the camera stream is then performed on the video production server. I.e. the entry and the exit (beginning and ending) of the video clip is defined on the selected camera stream stored on the video production server.

One important advantage of the architecture of the video production system 200 according to the present disclosure is the scalability of the cloud recorder 207. The cloud recorder can be rented on an as needed basis in terms of duration and capacity. I.e. if many camera streams from low usage cameras 104 need to be recorded, the cloud recorder 207 can be scaled accordingly. Therefore, the broadcaster does not the need to provide for a lot of hardware that can handle storage and processing capabilities for big events when such events only occur from time to time. This is an important cost advantage for the broadcaster.

The video production system 200 enables an adapted method for video production. The method comprises a first step S1 storing of camera streams on the cloud recorder 207. In step S2 all recorded camera streams are provided as low data rate streams enabling an operator to browse through all recorded camera streams. In step S3 the operator selects one recorded camera stream for replay. Finally, the selected camera stream is provided as a high data rate stream to a video production server.

## Claims

1. Video production system (200) comprisinga plurality of low usage cameras (104) occasionally used in a program output stream, a plurality of cameras (103) frequently used in a program output stream and a video production server (201) which ingests camera streams provided by the plurality of frequently used cameras (103), wherein the system further comprises a cloud recorder (207),
- wherein the cloud recorder (207) ingests and stores camera streams provided by the plurality of low usage cameras (104) occasionally used in the program output stream,
**characterized in that**
- the video production server (201) stores the camera streams provided by the plurality of frequently used cameras (103),
- that the cloud recorder (207) is communicatively connected via a first data connection (212) with a replay device (211) enabling an operator to browse through all the recorded camera streams from the plurality of low usage cameras (104) and to select one of the recorded camera streams for replay by sending a corresponding command to the cloud recorder (207); and
- that the cloud recorder (207) is communicatively connected via a second data connection (216) for providing the recorded camera stream that has been selected to the video production server (201).

2. Video production system according to claim 1, wherein the cloud recorder (207) is adapted for transferring the recorded camera streams as low bit rate data streams via the first data connection (212) and for transferring the selected camera stream as a high bit rate data stream via the second data connection (216).

3. Video production system according to claim 1 or 2, further comprising a video encoder (203) for encoding the camera streams of the low usage cameras (104).

4. Video production system according to one of the preceding claims, wherein the second data connection (216) connects the cloud recorder (207) with a file access and transcoder device (214) receiving a command from the replay device (211) identifying the selected camera stream, wherein the file access and transcoder device (214) downloads the selected camera stream from the cloud recorder (207).

5. Video production system according to claim 4, wherein the file access and transcoder device (214) transcodes the downloaded camera stream and transfers it to the video production server (201).

6. Method for video production system, wherein the video system comprises a plurality of cameras (104) occasionally used in a program output stream, a plurality of cameras (103) frequently used in a program output stream and a video production server (201) which ingests camera streams provided by the plurality of frequently used cameras (103), wherein the system further comprises a cloud recorder (207), the method comprising
- storing (S1) camera streams from cameras (104) occasionally used in a program output stream on the cloud recorder (207),
- providing (S2) all camera streams recorded on the cloud recorder (207) as low data rate streams enabling an operator to browse through all recorded camera streams,
- selecting (S3) one camera stream recorded on the cloud recorder (207) for replay; and
- providing (S4) the selected camera stream as a high data rate stream from the cloud recorder to the video production server (201).

7. Method according to claim 6, wherein selecting a camera stream also involves defining a beginning and ending of the camera stream.

## Patentansprüche

1. Videoproduktionssystem (200), das eine Mehrzahl von Kameras (104) mit geringer Nutzung, die gelegentlich in einem Programmausgabestrom verwendet werden, eine Mehrzahl von Kameras (103), die häufig in einem Programmausgabestrom verwendet werden, und einen Videoproduktionsserver (201) umfasst, der Kameraströme aufnimmt, die von der Mehrzahl häufig verwendeter Kameras (103) bereitgestellt werden, wobei das System ferner einen Cloud-Recorder (207) umfasst,
- wobei der Cloud-Recorder (207) Kameraströme aufnimmt und speichert, die von der Mehrzahl von Kameras (104) mit geringer Nutzung bereitgestellt werden, die gelegentlich in dem Programmausgabestrom verwendet werden,
**dadurch gekennzeichnet, dass**
- der Videoproduktionsserver (201) die Kameraströme speichert, die von der Mehrzahl der häufig verwendeten Kameras (103) bereitgestellt werden,
- dass der Cloud-Recorder (207) kommunikativ über eine erste Datenverbindung (212) mit einer Wiedergabevorrichtung (211) verbunden ist, die es einem Bediener ermöglicht, durch alle aufgezeichneten Kameraströme von der Mehrzahl von Kameras (104) mit geringer Nutzung zu browsen und einen der aufgezeichneten Kameraströme zur Wiedergabe auszuwählen, indem ein entsprechender Befehl an den Cloud-Recorder (207) gesendet wird; und
- dass der Cloud-Recorder (207) über eine zweite Datenverbindung (216) kommunikativ verbunden ist, um den aufgezeichneten Kamerastrom, der ausgewählt wurde, an den Videoproduktionsserver (201) zu liefern.

2. Videoproduktionssystem nach Anspruch 1, wobei der Cloud-Recorder (207) dazu eingerichtet ist, um die aufgezeichneten Kameraströme als Datenströme mit niedriger Bitrate über die erste Datenverbindung (212) zu übertragen und um den ausgewählten Kamerastrom als Datenstrom mit hoher Bitrate über die zweite Datenverbindung (216) zu übertragen.

3. Videoproduktionssystem nach Anspruch 1 oder 2, das ferner einen Video-Encoder (203) zur Kodierung der Kameraströme der Kameras (104) mit geringer Nutzung umfasst.

4. Videoproduktionssystem nach einem der vorhergehenden Ansprüche, wobei die zweite Datenverbindung (216) den Cloud-Recorder (207) mit einer Dateizugriffs- und Transkodiervorrichtung (214) verbindet, die einen Befehl von der Wiedergabevorrichtung (211) empfängt, der den ausgewählten Kamerastrom identifiziert, wobei die Dateizugriffs- und Transkodiervorrichtung (214) den ausgewählten Kamerastrom von dem Cloud-Recorder (207) herunterlädt.

5. Videoproduktionssystem nach Anspruch 4, wobei die Dateizugriffs- und Transkodiervorrichtung (214) den heruntergeladenen Kamerastrom transkodiert und ihn an den Videoproduktionsserver (201) überträgt.

6. Verfahren für ein Videoproduktionssystem, wobei das Videosystem eine Mehrzahl von Kameras (104), die gelegentlich in einem Programmausgabestrom verwendet werden, eine Mehrzahl von Kameras (103), die häufig in einem Programmausgabestrom verwendet werden, und einen Videoproduktionsserver (201) umfasst, der Kameraströme aufnimmt, die von der Mehrzahl häufig verwendeter Kameras (103) bereitgestellt werden, wobei das System ferner einen Cloud-Recorder (207) umfasst, wobei das Verfahren umfasst
- Speichern (S1) von Kameraströmen von Kameras (104), die gelegentlich in einem Programmausgangsstrom verwendet werden, auf dem Cloud-Recorder (207),
- Bereitstellen (S2) aller auf dem Cloud-Recorder (207) aufgezeichneten Kameraströme als Ströme mit niedriger Datenrate, die es einem Bediener ermöglichen, durch alle aufgezeichneten Kameraströme zu browsen,
- Auswählen (S3) eines auf dem Cloud-Recorder (207) aufgezeichneten Kamerastroms zur Wiedergabe; und
- Bereitstellen (S4) des ausgewählten Kamerastroms als Strom mit hoher Datenrate von dem Cloud-Recorder an den Videoproduktionsserver (201).

7. Verfahren nach Anspruch 6, wobei das Auswählen eines Kamerastroms auch das Definieren eines Anfangs und eines Endes des Kamerastroms beinhaltet.

## Revendications

1. Système de production vidéo (200) comprenant une pluralité de caméras à faible utilisation (104), occasionnellement utilisées dans un flux de sortie de programme, une pluralité de caméras (103) fréquemment utilisées dans un flux de sortie de programme et un serveur de production vidéo (201) qui ingère les flux de caméra fournis par la pluralité de caméras fréquemment utilisées (103), le système comprenant en outre un enregistreur cloud (207),
- l'enregistreur cloud (207) ingérant et stockant les flux de caméra fournis par la pluralité de caméras à faible utilisation (104), utilisées occasionnellement dans le flux de sortie du programme,
**caractérisé en ce que**
- le serveur de production vidéo (201) stocke les flux de caméra fournis par la pluralité de caméras fréquemment utilisées (103),
- l'enregistreur cloud (207) est relié par communication via une première connexion de données (212) à un dispositif de relecture (211) permettant à un opérateur de parcourir tous les flux de caméra enregistrés, provenant de la pluralité de caméras à faible utilisation (104), et de sélectionner l'un des flux de caméra enregistrés pour la relecture en envoyant une commande correspondante à l'enregistreur cloud (207) ; et **en ce que**
- l'enregistreur cloud (207) est relié par communication via une seconde connexion de données (216) pour fournir le flux de caméra enregistré qui a été sélectionné au serveur de production vidéo (201).

2. Système de production vidéo selon la revendication 1, l'enregistreur cloud (207) étant adapté au transfert des flux de caméra enregistrés en tant que flux de données à faible débit via la première connexion de données (212) et au transfert du flux de caméra sélectionné en tant que flux de données à débit élevé via la seconde connexion de données (216).

3. Système de production vidéo selon la revendication 1 ou 2, comprenant en outre un encodeur vidéo (203) pour encoder les flux de caméra des caméras à faible utilisation (104).

4. Système de production vidéo selon l'une des revendications précédentes, la seconde connexion de données (216) reliant l'enregistreur cloud (207) à un dispositif d'accès aux fichiers et de transcodage (214) qui reçoit une commande du dispositif de relecture (211) identifiant le flux de caméra sélectionné, le dispositif d'accès aux fichiers et de transcodage (214) téléchargeant le flux de caméra sélectionné à partir de l'enregistreur cloud (207).

5. Système de production vidéo selon la revendication 4, le dispositif d'accès aux fichiers et de transcodage (214) transcodant le flux de caméra téléchargé et le transférant au serveur de production vidéo (201).

6. Procédé pour le système de production vidéo, le système vidéo comprenant une pluralité de caméras (104) utilisées occasionnellement dans un flux de sortie de programme, une pluralité de caméras (103) utilisées fréquemment dans un flux de sortie de programme et un serveur de production vidéo (201) qui ingère les flux de caméra fournis par la pluralité de caméras utilisées fréquemment (103), le système comprenant en outre un enregistreur cloud (207), le procédé consistant à
- stocker (S1) les flux de caméra provenant des caméras (104) occasionnellement utilisées dans un flux de sortie de programme sur l'enregistreur cloud (207),
- fournir (S2) tous les flux de caméra enregistrés sur l'enregistreur cloud (207) en tant que flux de données à faible débit, permettant à un opérateur de parcourir tous les flux de caméra enregistrés,
- sélectionner (S3) un flux de caméra enregistré sur l'enregistreur cloud (207) pour la relecture ; et
- à fournir (S4) le flux de caméra sélectionné en tant que flux de données à débit élevé de l'enregistreur cloud au serveur de production vidéo (201).

7. Procédé selon la revendication 6, la sélection d'un flux de caméra impliquant également la définition d'un début et d'une fin du flux de caméra.
